# EUROPÄISCHE PATENTSCHRIFT

(11) **EP 2 043 892 B1**
(45) Veröffentlichungstag und Bekanntmachung des Hinweises auf die Patenterteilung: **24.04.2013**
(21) Anmeldenummer: 07786857.8
(22) Anmeldetag: 27.06.2007
(51) Int. Cl.: B60R 21/217

(54) **RASTVORRICHTUNG ZUR FIXIERUNG EINES AN EINEM HALTERAHMEN BEFESTIGTEN GASSACKS IN EINEM GEHÄUSE EINES BEIFAHRERAIRBAGMODULS**
LATCHING DEVICE FOR FIXING AN AIRBAG, WHICH IS FASTENED TO A HOLDING FRAME, IN A HOUSING OF A FRONT PASSENGER AIRBAG MODULE
DISPOSITIF D'ENCLIQUETAGE POUR LA FIXATION D'UN SAC DE GAZ FIXÉ À UN CADRE DE FIXATION DANS UN BOÎTIER D'UN MODULE D'AIRBAG DE PASSAGER

(30) Priorität: 24.07.2006 DE 102006034740
(43) Veröffentlichungstag der Anmeldung: 08.04.2009
(73) Patentinhaber: Takata AG, 63743 Aschaffenburg (DE)
(72) Erfinder: SAHM, Norbert, 63743 Aschaffenburg (DE)
(74) Vertreter: Baumgärtel, Gunnar
(86) Internationale Anmeldenummer: PCT/EP2007/056406
(87) Internationale Veröffentlichungsnummer: WO 2008/012156

(56) Entgegenhaltungen:
- EP-A2- 0 769 426
- EP-A2- 0 876 942
- DE-A1- 10 056 835
- DE-A1- 19 850 463
- DE-U1- 29 813 911
- JP-A- 6 219 229
- US-A1- 2004 100 071

## Beschreibung

Die Erfindung betrifft eine Vorrichtung zur Fixierung eines an einem Halterahmen befestigten Gassacks in einem Gehäuse eines Beifahrerairbagmoduls nach dem Oberbegriff des Anspruchs 1.

Zur Fixierung eines an einem Halterahmen befestigten Gassacks in einem Gehäuse eines Airbagmoduls sind unterschiedliche Lösungen bekannt geworden. So ist aus der DE 198 50 463 A1 ein Airbagmodul bekannt, bei dem ein Gassack mit einem Halterahmen verbunden ist, der Verriegelungselemente aufweist, mit deren Hilfe der Halterahmen und damit der Gassack im Gehäuse fixiert werden können. Dieses Airbagmodul weist den Nachteil auf, dass wegen der Verriegelungselemente das Einschweißen des gefalteten Gassacks in eine flexible Schutzhülle erschwert wird, die das Gassackpaket gasdicht umschließt. Das gasdichte Umschließen ermöglicht eine Minimierung des Packmaßes des Gassackpaketes durch Erzeugung eines Unterdruckes in der flexiblen Schutzhülle. Ein weiterer Nachteil besteht darin, dass das Gehäuse im Verriegelungsbereich doppelwandig ausgeführt sein muss.

Bei dem aus der Anmeldung GB 2 323 572 A bekannten Airbagmodul weist der Halterahmen des Gassacks Verriegelungselemente in Form von Rasthaken auf, die in Öffnungen des Airbaggehäuses eingreifen. Auch bei dieser Anordnung besteht der Nachteil, dass wegen der Verriegelungselemente das Einschweißen des gefalteten Gassacks erschwert wird.

Aus dem US-Patent 5 556 124 ist ein Airbagmodul bekannt, bei dem der Halterahmen des Gassacks zwischen Vorsprüngen im Inneren des Airbaggehäuses gehalten wird. Das Gehäuse besteht aus einem Hauptteil mit U-förmigem Querschnitt und zwei Endteilen. Der Halterahmen muss vor der Montage der Endteile in das Gehäuse eingeführt werden, da die Seitenwände des Hauptteils durch den von oben in das Gehäuse eingeführten Halterahmen voneinander weggedrückt werden müssen, um den Halterahmen zwischen den Vorsprüngen zu positionieren. Dabei kann bei einem von einer Schutzhülle umgebenen Gassackpaket, bei dem der Halterahmen mit in der Schutzhülle liegt, diese beim Wegdrücken der Gehäusewände beschädigt werden. Weiterhin weist diese Anordnung den Nachteil auf, dass wegen des dreiteiligen Gehäuses umfangreiche Montagearbeiten erforderlich sind.

Schließlich ist aus dem Gebrauchsmuster DE 20 2005 009 002 U1 eine Modulbaugruppe für eine Airbageinrichtung bekannt, bei der der Halterahmen durch Befestigungsmittel, die über den Halterahmen greifen, gehalten wird. Dabei wird zunächst der Halterahmen im Airbaggehäuse positioniert. Anschließend werden die Befestigungsmittel eingesetzt und mit dem Gehäuse verschraubt oder vernietet. Weiterhin ist aus dieser Druckschrift bekannt, den Halterahmen mittels einer Klammer zu fixieren. Hierbei wird nach dem Fixieren des Gassackpaketes die ringförmige, an einer Stelle gespaltene Klammer aufgespreizt und von außen über den Halterahmen und eine Gehäusegrundplatte gestülpt. Anschließend wird die Klammer im Bereich des Spaltes mittels Schraube und Mutter zusammengezogen. Diese Anordnungen weisen den Nachteil auf, dass zur Fixierung Schraub- oder Nietvorgänge erforderlich sind.
Bei einer Ausführungsform in dieser Druckschrift ist eine Klammer vorgesehen, die ein Gehäuseteil, das über den Halterrahmen greift, und eine Trägerplatte, auf der der Halterahmen liegt, miteinander verbindet. Diese Klammer steht entweder unter elastischer Vorspannung oder ist plastisch verformbar. Bei dieser Ausführungsform kann bei der Montage der Klammer die Schutzfolie über dem Gassack beschädigt werden.

Der Erfindung liegt die Aufgabe zugrunde, den Halterahmen eines Gassacks im Airbaggehäuse so zu fixieren, dass der Montageaufwand gering ist und dass in dem Fall, dass der Gassack im gefalteten Zustand in einer flexiblen Schutzhülle angeordnet ist, die Beschädigung der Schutzhülle bei der Montage des Gassacks zumindest weitestgehend ausgeschlossen ist.

Erfindungsgemäß wird das gemäß den Merkmalen des Anspruchs 1 erreicht.

Bei einer Vorrichtung zur Fixierung eines an einem Halterahmen befestigten Gassacks in einem Gehäuse eines Beifahrerairbagmoduls mittels mindestens eines Klemmelementes ist erfindungsgemäß vorgesehen, dass das Gehäuse und das Klemmelement im Bereich des Halterahmens unverformbar ist, dass das Klemmelement frei von Schraub- oder Nietverbindungen ist und so bemessen ist, dass es beim Einführen in die Klemmstellung einen Abstand zum Halterahmen hat, der größer ist als die Dicke einer gegebenenfalls vorgesehenen Schutzfolie für den Gassack, und dass das Klemmelement durch im Abstand zum Halterahmen vorgesehene Mittel in seiner Klemmstellung fixiert ist. Da das Klemmelement frei von Schraub- oder Nietverbindungen ist, wird der Montageaufwand für das Klemmelement verringert. Infolge des Abstandes der Halteelemente zum Halterahmen beim Einführen des Klemmelementes in die Klemmstellung, wobei der Abstand größer ist als die Dicke einer Schutzfolie, ist die Gefahr der Beschädigung der Schutzfolie zumindest stark vermindert.

In einer Ausführungsform ist das Klemmelement von außen durch Löcher im Gehäuse über den Halterahmen schiebbar und das Klemmelement weist als Mittel zu seiner Fixierung in der Klemmstellung im Abstand zum Halterahmen mindestens einen Rastabschnitt auf, dem ein Rastabschnitt im Gehäuse zugeordnet ist. Das Klemmelement wird dabei zur Fixierung des Halterahmens nach dessen Positionierung im Airbaggehäuse von außen in dass Gehäuse eingeschoben bis es an dem dort vorgesehenen Rastabschnitt eingerastet ist.

Bei einer bevorzugten Ausführungsform weist das Gehäuse für das Klemmelement zwei Rastabschnitte auf, von denen sich ein Rastabschnitt an der Seitenwand des Gehäuses und ein Rastabschnitt außen an der Unterseite des Gehäuses befindet.

Es ist zweckmäßig, dass auf gegenüberliegenden Seiten des Halterahmens mindestens ein Klemmelement vorgesehen ist.

Es können sowohl mehrere einzelne Klemmelemente als auch Klemmleisten vorgesehen sein.

In einer weiteren Ausführungsform ist ein zweiteiliges Gehäuse vorgesehen, wobei jedes Gehäuseteil innen Klemmelemente aufweist. Dabei wird das Gassackpaket in einem ersten Schritt in eine Gehäusehälfte eingelegt, wobei die Hälfte des Gassackpakets durch die Klemmelemente in der Gehäusehälfte gehalten wird, indem eine erste Seite des Halterahmens zwischen die Klemmelemente geschoben wird. In einem zweiten Schritt wird die zweite Gehäusehälfte mit der ersten Gehäusehälfte verbunden, wobei eine zweite, der ersten Seite gegenüberliegende Seite des Halterahmens zwischen die Klemmelemente der zweiten Gehäusehälfte geschoben wird.

Als Klemmelemente sind bei dieser Ausführungsform vorzugsweise mindestens zwei sich im Abstand zueinander gegenüberliegende Vorsprünge vorgesehen. Zwischen diesen Vorsprüngen wird also der Halterahmen nach dem Zusammenfügen der Gehäusehälften gehalten.

Es ist vorteilhaft, dass die Gehäuseteile über mindestens ein Scharnier verbunden sind und an gegenüberliegenden Stirnseiten miteinander verbindbar sind. Als Verbindungselemente können dort sowohl Rastelemente als auch Schrauben vorgesehen sein.

Die Erfindung soll in Ausführungsbeispielen anhand von Zeichnungen erläutert werden. Es zeigen:
- Fig. 1: eine Ausführungsform der erfindungsgemäßen Anordnung mit externen Klemmelementen;
- Fig. 2: einen vergrößerten Schnitt durch einen Abschnitt des Airbaggehäuses nach Fig. 1 und durch ein Klemmelement ;
- Fig. 2a - d: Montageschritte eines Klemmelementes der Ausführungsform der Figuren 1 und 2;
- Fig. 3: eine Ausführungsform mit externen Klemmleisten;
- Fig. 4: einen vergrößerten Schnitt durch einen Abschnitt des Airbaggehäuses nach Fig. 3 und durch ein Klemmelement der Klemmleiste;
- Fig. 5: eine Ausführungsform mit einem zweiteiligen Airbaggehäuse;
- Fig. 6: einen Querschnitt durch das Airbaggehäuse der Fig. 5;
- Fig. 7: eine Ansicht des Airbaggehäuses nach Fig. 5 von einer Stirnseite.

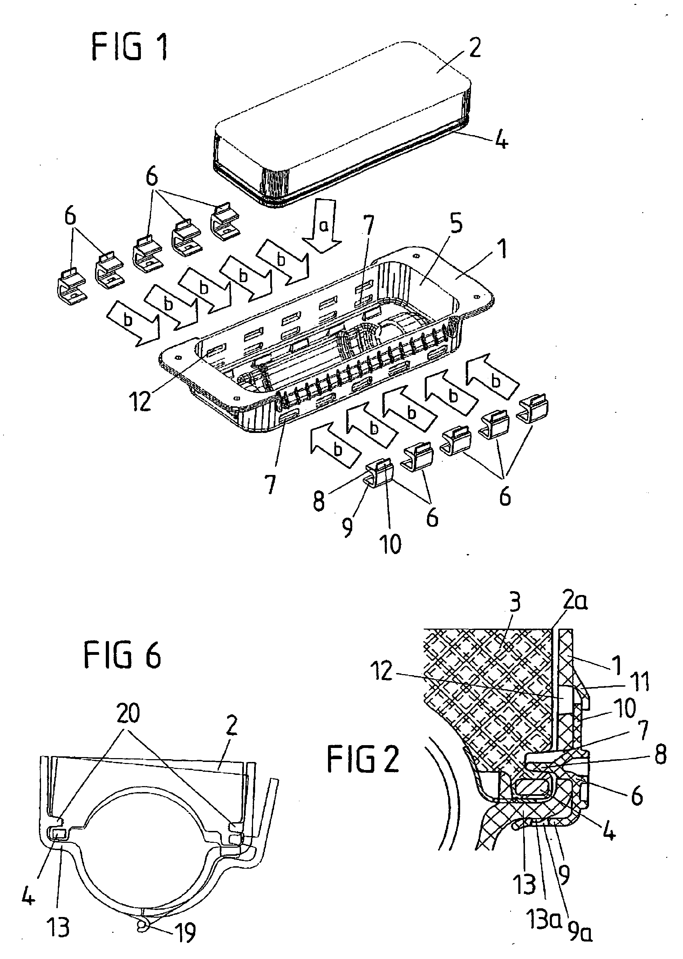

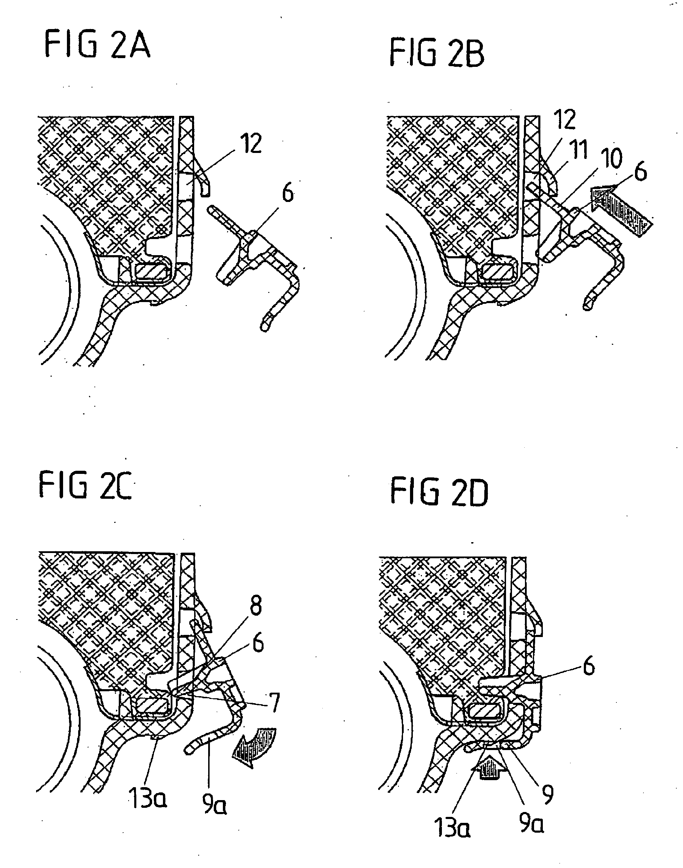

In der Fig. 1 ist ein Airbaggehäuse 1 für die Aufnahme eines Rohrgasgenerators (nicht dargestellt) und eines Gassackpaketes 2 dargestellt. Das Gassackpaket 2 besteht aus einem gefalteten Gassack 3, der im Bereich des nicht dargestellten Einblasmundes mit einem Halterahmen 4 verbunden ist (Fig.2) und von einer Schutzhülle 2a umgeben ist. Das Gassackpaket 2 wird in einem ersten Schritt a durch die Öffnung 5 des Airbaggehäuses in dieses eingesetzt. In einem zweiten Schritt b wird der Halterahmen 4 und damit das Gassackpaket 2 mittels einzelner Rastklemmen 6, die durch Löcher 7 im Airbaggehäuse 1 greifen, in diesem befestigt. Wie insbesondere aus der Fig. 2 ersichtlich ist, weisen die Rastklemmen 6 einen Klemmabschnitt 8 und Rastabschnitte 9 und 10 auf. Dem Rastabschnitt 10 ist am Airbaggehäuse 1 ein Rastabschnitt 11 zugeordnet, in dessen Bereich das Airbaggehäuse 1 Löcher 12 aufweist. Der Rastabschnitt 9 weist ein Loch 9a auf, dem außen am Boden des Airbaggehäuses 1 ein Noppen 13a zugeordnet ist. Bei der Montage jeder Rastklemme 6 wird diese in einem ersten Schritt positioniert, wie es in Fig. 2a dargestellt ist. In einem zweiten Schritt, der in der Fig. 2b dargestellt ist, wird der Rastabschnitt 10 hinter den Rastabschnitt 11 in das Loch 12 geschoben. Anschließend wird in einem dritten Schritt, der in der Fig. 2c dargestellt ist, der Klemmabschnitt 8 durch das Loch 7 geschwenkt. Dann wird der Rastabschnitt 9 durch weiteres Schwenken der Rastklemme 6 außen auf den Boden des Airbaggehäuses 1 geschoben, wobei er sich elastisch verformt, bis der Noppen 13a im Loch 9a eingerastet ist, wie es in den Figuren 2 und 2d dargestellt ist. In dieser Endlage greift der Klemmabschnitt 8 über den Halterahmen 4 während der Klemmabschnitt 9 außen am Bodenabschnitt 13 anliegt. Die Rastklemme 6 und insbesondere der im Bereich des Halterahmens 4 liegende Klemmabschnitt 8 werden bei der Montage nicht verformt.

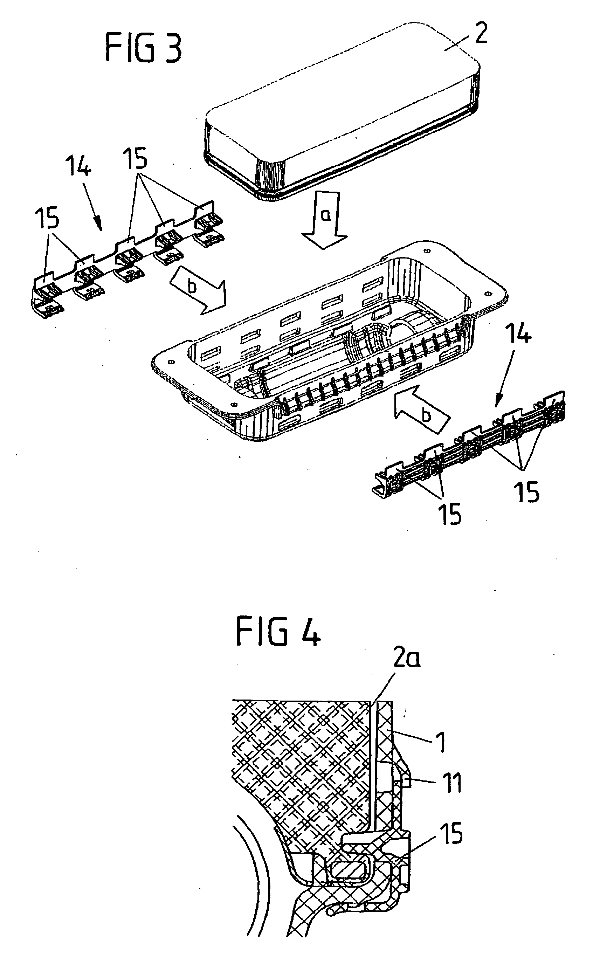

In den Figuren 3 und 4 ist eine Ausführungsform dargestellt, bei der an Stelle der einzelnen Rastklemmen 6 Klemmleisten 14 vorgesehen sind. Klemmabschnitte 15 dieser Klemmleisten haben den gleichen Aufbau wie die Rastklemmen 6. Die Montage des Halterahmens 4 erfolgt in gleicher Weise wie mit den einzelnen Rastklemmen, wobei aber die Klemmabschnitte 15 jeder Klemmleiste 14 gleichzeitig in das Airbaggehäuse 1 eingeführt werden.

Bei den dargestellten Ausführungsformen kann der Rohrgasgenerator vor oder nach der Montage des Halterahmens montiert werden.

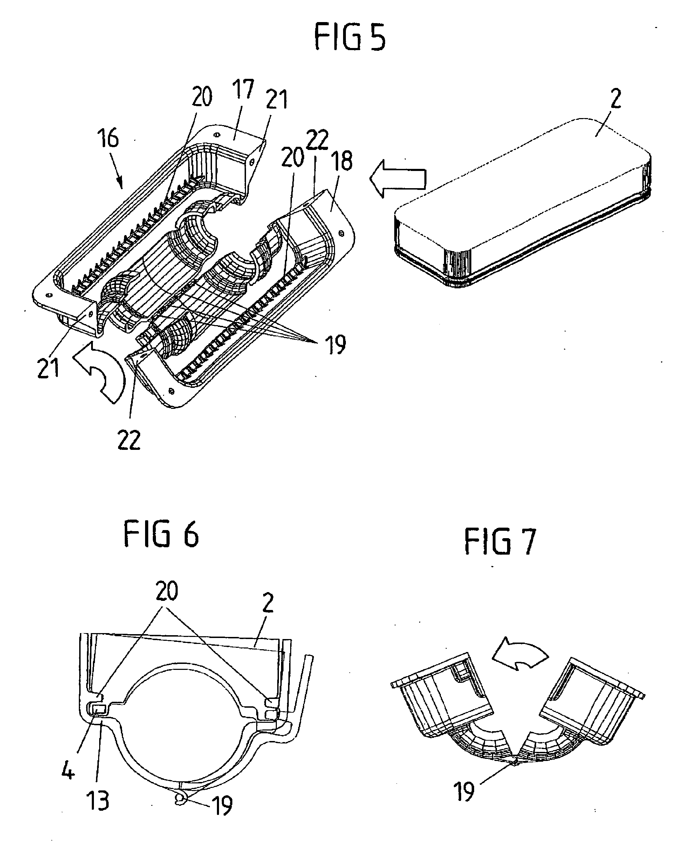

Bei der Ausführungsform der Figuren 5 bis 7 ist ein zweiteiliges Airbaggehäuse 16 für die Aufnahme eines nicht dargestellten Rohrgasgenerators und des Gassackpaketes 2 vorgesehen. Das Airbaggehäuse besteht aus zwei Gehäuseteilen 17 und 18, die mittels Scharnieren 19 miteinander verbunden sind. Jedes Gehäuseteil weist in Richtung der Längsachse des nicht dargestellten Rohrgasgenerators nebeneinander liegende Vorsprünge 20 auf.

Bei der Montage wird in einem Schritt a zunächst das Gassackpaket 2 in ein Gehäuseteil, z.B. in das Gehäuseteil 17 eingelegt. Dabei wird die Hälfte des Gassackpakets durch die Vorsprünge 20 im Gehäuseteil 17 gehalten. In einem zweiten Schritt b wird das zweite Gehäuseteil 18 an den Scharnieren 19 eingehängt und durch eine Rotation geschlossen. Zur dauerhaften Schließung des Airbaggehäuses 16 werden die Gehäuseteile 17, 18 an ihren Stirnseiten 21 und 22 mit nicht dargestellten Rasthaken oder Schrauben miteinander verbunden. Wie aus der Fig. 6 ersichtlich ist, ist der Halterahmen 4 nach Schließung des Airbaggehäuses 16 zwischen dem Bodenabschnitt 13 und den Vorsprüngen 20 eingeklemmt.

Bei dieser Ausführungsform wird der Rohrgasgenerator vor der Montage des Gassackpaketes in das Airbaggehäuse 16 eingeführt.

## Patentansprüche

1. Vorrichtung zur Fixierung eines an einem Halterahmen befestigten Gassacks in einem Gehäuse eines Beifahrerairbagmoduls mittels mindestens eines vom Halterahmen getrennt angeordneten Klemmelementes,
**dadurch gekennzeichnet, dass** das Gehäuse (1, 16) im Bereich des Halterahmens (4) unverformbar ist, dass das Klemmelement (6, 14, 20) im Bereich des Halterahmens (4) einen bei der Montage nicht verformbaren Klemmabschnitt (8) im Bereich des Halterahmens (4) hat und so bemessen ist, dass es beim Einführen in die Klemmstellung einen Abstand zum Halterahmen (4) hat, der größer ist als die Dicke einer Schutzfolie (2a) für den Gassack (3) unabhängig davon, ob diese vorgesehen ist, und dass das Klemmelement (6, 14) durch mit Abstand zum Halterahmen (4) vorgesehene Mittel (9a, 10, 11, 13a) in seiner Klemmstellung fixiert ist.

2. Vorrichtung nach Anspruch 1, **dadurch gekennzeichnet, dass** das Klemmelement (6, 14) von außen durch Löcher (7) im Gehäuse (1) über den Halterahmen (4) schiebbar ist und dass das Klemmelement (6,14) als Mittel zu ihrer Fixierung in der Klemmstellung im Abstand zum Halterahmen (4) mindestens einen Rastabschnitt (9a, 10) aufweist, dem ein Rastabschnitt (13a , 11) im Gehäuse (1) zugeordnet ist.

3. Vorrichtung nach Anspruch 1 oder 2, **dadurch gekennzeichnet, dass** das Gehäuse (1) zwei Rastabschnitte (11, 13a) für das Klemmelement (6) aufweist, von denen sich ein erster Rastabschnitt (11) an der Seitenwand des Gehäuses (1) und ein zweiter Rastabschnitt (13a) außen an der Unterseite des Gehäuses (1) befindet.

4. Vorrichtung nach mindestens einem der vorhergehenden Ansprüche, **dadurch gekennzeichnet, dass** auf gegenüberliegenden Seiten des Halterahmens (4) mindestens ein Klemmelement (6) vorgesehen ist.

5. Vorrichtung nach mindestens einem der vorhergehenden Ansprüche, **dadurch gekennzeichnet, dass** mehrere einzelne Klemmelemente (6) vorgesehen sind.

6. Vorrichtung nach mindestens einem der vorhergehenden Ansprüche, **dadurch gekennzeichnet, dass** als Klemmelemente Klemmleisten (14) vorgesehen sind.

7. Vorrichtung nach Anspruch 1. **dadurch gekennzeichnet, dass** ein zweiteiliges Gehäuse (16) vorgesehen ist, wobei jedes Gehäuseteil (17, 18) innen Klemmelemente (20) aufweist.

8. Vorrichtung nach Anspruch 7, **dadurch gekennzeichnet, dass** als Klemmelemente mindestens zwei sich im Abstand zueinander gegenüberliegende Vorsprünge (20) vorgesehen sind.

9. Vorrichtung nach Anspruch 7 oder 8, **dadurch gekennzeichnet, dass** die Gehäuseteile (17, 18) über mindestens ein Scharnier (19) verbunden sind und an gegenüberliegenden Stirnseiten (21, 22) durch Verbindungselemente miteinander verbindbar sind.

10. Vorrichtung nach Anspruch 9, **dadurch gekennzeichnet, dass** als Verbindungselemente Rastelemente vorgesehen sind.

11. Vorrichtung nach Anspruch 9, **dadurch gekennzeichnet, dass** als Verbindungselemente Schrauben vorgesehen sind.

## Claims

1. A device for fixing an airbag which is fastened to a holding frame in a housing of a front passenger airbag module by means of at least one clamping element arranged separately from the holding frame, **characterized in that** the housing (1, 16) is non-deformable in the region of the holding frame (4), **in that**, in the region of the holding frame (4), the clamping element (6, 14, 20) has a clamping portion (8) in the region of the holding frame (4) which is not deformalble during installation, and is dimensioned in such a manner that it is spaced from the holding frame (4) when being introduced into the clamping position by a distance which is greater than the thickness of a protective film (2a) for the airbag (3), independent on whether it is provided, and **in that** the clamping element (6, 14) is fixed in its clamping position by means (9a, 10, 11, 13a) provided at a distance from the holding frame (4).

2. The device as claimed in claim 1, **characterized in that** the clamping element (6, 14) can be pushed over the holding frame (4) from the outside through holes (7) in the housing (1) and **in that** the clamping element (6, 14) has at least one latching section (9a, 10) as a means for fixing it in the clamping position at a distance from the holding frame (4), with which latching section (9a, 10) a latching section (13a, 11) in the housing (1) is associated.

3. The device as claimed in claim 1 or 2, **characterized in that** the housing (1) has two latching sections (11, 13a) for the clamping element (6), of which a first latching section (11) is located on the side wall of the housing (1) and a second latching section (13a) on the outside of the underside of the housing (1).

4. The device as claimed in at least one of the preceding claims, **characterized in that** at least one respective clamping element (6) is provided on opposite sides of the holding frame (4).

5. The device as claimed in at least one of the preceding claims, **characterized in that** a plurality of individual clamping elements (6) are provided.

6. The device as claimed in at least one of the preceding claims, **characterized in that** clamping strips (14) are provided as clamping elements.

7. The device as claimed in claim 1, **characterized in that** a two-part housing (16) is provided, each housing part (17, 18) having clamping elements (20) therein.

8. The device as claimed in claim 7, **characterized in that** at least two projections (20) located at a distance opposite one another are provided as the clamping elements.

9. The device as claimed in claim 7 or 8, **characterized in that** the housing parts (17, 18) are connected via at least one hinge (19) and are connectable to one another at opposite end faces (21, 22) by connecting elements.

10. The device as claimed in claim 9, **characterized in that** latching elements are provided as connecting elements.

11. The device as claimed in claim 9, **characterized in that** screws are provided as connecting elements.

## Revendications

1. Dispositif de fixation d'un coussin à gaz fixé à un cadre de retenue, dans un boîtier d'un module de coussin de sécurité pour passager, au moyen d'au moins un élément de coincement occupant un emplacement distinct de celui dudit cadre de retenue, **caractérisé par le fait que** le boîtier (1, 16) est indéformable dans la région du cadre de retenue (4), que l'élément de coincement (6, 14, 20) comporte, dans la région du cadre de retenue (4), un tronçon de coincement (8) non déformable au stade du montage dans la région dudit cadre de retenue (4), et est dimensionné de façon telle qu'il présente vis-à-vis dudit cadre de retenue (4), lors de l'insertion jusqu'à la position de coincement, une distance supérieure à l'épaisseur d'un film de protection (2a) dédié au coussin à gaz (3), indépendamment de la présence potentielle dudit film, et que ledit élément de coincement (6, 14) est fixé, dans sa position de coincement, par des moyens (9a, 10, 11, 13a) prévus à distance dudit cadre de retenue (4).

2. Dispositif selon la revendication 1, **caractérisé par le fait que** l'élément de coincement (6, 14) peut être animé de coulissements au-dessus du cadre de retenue (4), depuis l'extérieur, en traversant des trous (7) dans le boîtier (1), et que ledit élément de coincement (6, 14) comporte à distance dudit cadre de retenue (4), en tant que moyen affecté à son fixation dans la position de coincement, au moins un tronçon d'encliquetage (9a, 10) auquel un tronçon d'encliquetage (13a, 11) est associé dans ledit boîtier (1).

3. Dispositif selon la revendication 1 ou 2, **caractérisé par le fait que** le boîtier (1) comprend deux tronçons d'encliquetage (11, 13a) affectés à l'élément de coincement (6), parmi lesquels un premier tronçon d'encliquetage (11) se trouve sur la paroi latérale dudit boîtier (1) et un second tronçon d'encliquetage (13a) est placé extérieurement à la face inférieure dudit boîtier (1).

4. Dispositif selon au moins l'une des revendications précédentes, **caractérisé par le fait qu'**au moins un élément de coincement (6) est prévu sur des côtés opposés du cadre de retenue (4).

5. Dispositif selon au moins l'une des revendications précédentes, **caractérisé par le fait que** plusieurs éléments individuels de coincement (6) sont prévus.

6. Dispositif selon au moins l'une des revendications précédentes, **caractérisé par le fait que** des barrettes de coincement (14) sont prévues en tant qu'éléments de coincement.

7. Dispositif selon la revendication 1, **caractérisé par le fait qu'**il est prévu un boîtier (16) en deux parties, chaque partie (17, 18) dudit boîtier étant intérieurement pourvue d'éléments de coincement (20).

8. Dispositif selon la revendication 7, **caractérisé par le fait qu'**au moins deux saillies (20), se faisant mutuellement face à distance, sont prévues en tant qu'éléments de coincement.

9. Dispositif selon la revendication 7 ou 8, **caractérisé par le fait que** les parties (17, 18) du boîtier sont reliées par l'intermédiaire d'au moins une charnière (19) et peuvent être reliées l'une à l'autre, par l'intermédiaire d'éléments de liaison, au niveau de faces extrêmes (21, 22) situées en vis-à-vis mutuel.

10. Dispositif selon la revendication 9, **caractérisé par le fait que** des éléments d'encliquetage sont prévus en tant qu'éléments de liaison.

11. Dispositif selon la revendication 9, **caractérisé par le fait que** des vis sont prévues en tant qu'éléments de liaison.
